(19) Europäisches Patentamt
European Patent Office
Office européen des brevets

(11) **EP 3 964 620 A1**

(12) **EUROPEAN PATENT APPLICATION**
published in accordance with Art. 153(4) EPC

(43) Date of publication:
**09.03.2022 Bulletin 2022/10**

(21) Application number: **20818225.3**

(22) Date of filing: **02.06.2020**

(51) International Patent Classification (IPC):
*D04H 3/16* (2006.01)    *B01D 39/16* (2006.01)
*D04H 3/011* (2012.01)

(52) Cooperative Patent Classification (CPC):
**B01D 39/16; D04H 3/011; D04H 3/16**

(86) International application number:
**PCT/JP2020/021802**

(87) International publication number:
**WO 2020/246472 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2019 JP 2019104626**

(71) Applicant: **Mitsui Chemicals, Inc.**
**Tokyo 105-7122 (JP)**

(72) Inventors:
• **HASHIMOTO, Takashi**
**Sodegaura-shi, Chiba 299-0265 (JP)**
• **IIBA, Kozo**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **MELT-BLOWN NONWOVEN FABRIC, FILTER, AND METHOD FOR PRODUCING MELT-BLOWN NONWOVEN FABRIC**

(57)    A melt-blown nonwoven fabric includes polybutylene terephthalate, in which an intrinsic viscosity of the melt-blown nonwoven fabric is 0.45 dl/g or more and 0.60 dl/g or less.

**Description**

Technical Field

The present invention relates to a melt-blown nonwoven fabric, a filter and a method of manufacturing a melt-blown nonwoven fabric.

Background Art

Since a nonwoven fabric manufactured by the melt-blown method (also referred to as "melt blown nonwoven fabric") can make the fibers that make up the nonwoven fabric finer, compared to general spunbond nonwoven fabrics, it has excellent flexibility, uniformity, and denseness. For this reason, the melt blown nonwoven fabric are used for filters such as filters for liquid, and filters for air, sanitary materials, medical materials, agricultural coating materials, civil engineering materials, building materials, oil adsorbents, automobile materials, electronic materials, separators, clothing, packaging materials and the like.

Generally, the filter is used for the purpose of collecting fine particles existing in liquid or gas and removing the fine particles from the liquid or gas. It is known that the efficiency of collecting fine particles by a filter (hereinafter, also referred to as "collection efficiency") tends to be better as the average fiber diameter of nonwoven fabric fibers constituting the filter is smaller.

For example, Patent Literature 1 describes that a filter material for an air filter having a filter material layer made of a melt-blown nonwoven fabric using polybutylene terephthalate and a reinforcing layer can significantly reduce the amount of gas generated from an organic substance. Further, for example, in Patent Literature 2, a nonwoven fabric for a filter characterized in that it is formed by laminating and integrating a melt-blown nonwoven fabric made of fibers with an average fiber diameter of from 1 to 8 $\mu$m including polybutylene terephthalate or polytrimethylene terephthalate, and a spunbond nonwoven fabric made of polyester fibers with an average fiber diameter of from 10 to 30 $\mu$m, is excellent in dust collecting performance, and is also excellent in mechanical properties and dimensional stability.

[Patent Literature 1] Japanese Patent Application Laid-Open (JP-A) No. 2008-238109
[Patent Literature 1] Japanese Patent Application Laid-Open (JP-A) No. 2007-125546

SUMMARY OF INVENTION

Technical Problem

Each melt-blown nonwoven fabric described in Patent Literatures 1 and 2 has a diameter of 1 $\mu$m or more, and since there is a case in which the melt-blown nonwoven fabric with such a large average fiber diameter has an inferior collection efficiency, further thin fibrillization is required. An attempt to simply thinly fiberizing the melt-blown nonwoven fabric cause the occurrence of fine lumps (also referred to as "resin particles") made of a resin on the nonwoven fabric, and there is a case in which, by using this melt-blown nonwoven fabric for the filter, the resin particles are mixed with liquid or gas passing through the filter, or the filter performance is deteriorated.

An objective of one aspect of the present disclosure is to provide a melt-blown nonwoven fabric, in which the small average fiber diameter is small, and the occurrence of resin particles is s uppressed.

An objective of another aspect of the present disclosure is to provide a filter including a m elt-blown nonwoven fabric, in which the small average fiber diameter is small, and the occurrence of resin particles is suppressed.

An objective of another aspect of the present disclosure is to provide a method of manufac turing a melt-blown nonwoven fabric, in which the small average fiber diameter is small, and the o ccurrence of resin particles is suppressed.

Solution to Problem

The means for solving the above described problem include the following embodiments.

<1> A melt-blown nonwoven fabric, comprising polybutylene terephthalate, wherein an intrinsic viscosity of the melt-blown nonwoven fabric is 0.45 dl/g or more and 0.60 dl/g or less.
<2> The melt-blown nonwoven fabric according to <1>, wherein an average fiber diameter is from 0.1 $\mu$m to 0.8 $\mu$m.
<3> The melt-blown nonwoven fabric according to <1> or <2>, wherein a number of resin particles with a diameter of 0.1 mm or more is less than 10 particles/m$^2$.
<4> The melt-blown nonwoven fabric according to any one of <1> to <3>, which is used for a filter.
<5> A filter comprising the melt-blown nonwoven fabric according to any one of <1> to <4>.

<6> A method of manufacturing a melt-blown nonwoven fabric, comprising: a melting process of melting polybutylene terephthalate or a resin composition including polybutylene terephthalate to obtain a molten material, a spinning process of spinning the molten material from a nozzle in whic h plural holes are aligned, and an extending process of extending the molten material, spun by the s pinning, with heated air,

wherein an intrinsic viscosity of the polybutylene terephthalate or the resin composition is 0.45 dl/g or more and 0.90 dl/g or less,
wherein a time from a start of the melting process to a start of the spinning process is from 2 minutes to 30 minutes, and
wherein a temperature of the molten material spun in the spinning process is from 255°C t o 350°C.

<7> The method of manufacturing a melt-blown nonwoven fabric according to <6>, wherein a temperature of the heated air is from 265°C to 380°C, and a flow rate of the heated air is from 200 Nm$^3$/h/m to 800 Nm$^3$/h/m.
<8> The method of manufacturing a melt-blown nonwoven fabric according to <6> or <7>, wherein an intrinsic viscosity of the melt-blown nonwoven fabric is 0.45 dl/g or more and 0.60 dl/g or less.

Advantageous Effects of Invention

According to one aspect of the present disclosure, a melt-blown nonwoven fabric, in whic h the small average fiber diameter is small, and the occurrence of resin particles is suppressed, is pr ovided.
According to another aspect of the present disclosure, a filter including a melt-blown non woven fabric, in which the small average fiber diameter is small, and the occurrence of resin partic les is suppressed, is provided.
According to another aspect of the present disclosure, a method of manufacturing a melt-b lown nonwoven fabric, in which the small average fiber diameter is small, and the occurrence of re sin particles is suppressed, is provided.

DESCRIPTION OF EMBODIMENTS

Hereinafter, an embodiment (hereinafter, also referred to as "present embodiment") in the present invention are described.
However, the present invention is not limited to the following embodiment. In the followi ng embodiment, the elements of the embodiments (including steps) are not essential, unless otherw ise stated or clearly deemed essential in principle. The numbers and the ranges thereof do not limit the invention as well.
In the present specification, the numerical range represented by "A to B" includes A and B as a minimum value and a maximum value, respectively.
In the present specification, when there are more than one kind of substances correspondin g to a component of a composition, the amount of each component in the composition refers to a to tal amount of the plural substances existing in the composition, unless otherwise stated.
In the present specification, when numerical ranges are described in a stepwise manner, th e upper limit value or the lower limit value of a numerical range may be replaced with the upper li mit value or the lower limit value of other numerical range. In a numerical range described in the present specification, the upper limit or the lower limit of the numerical range may be replaced wit h a relevant value indicated in any of Examples.
In the present specification, the "process" refers not only to a process that is independent f rom the other steps, but also to a step that cannot be clearly distinguished from the other steps, as 1 ong as the aim of the process is achieved.

<Melt-blown Nonwoven Fabric >

A melt-blown nonwoven fabric in the present embodiment includes polybutylene terephth alate, and an intrinsic viscosity of the melt-blown nonwoven fabric is 0.45 dl/g or more and 0.60 dl /g or less.
By the above configuration, the melt-blown nonwoven fabric, in which the small average f iber diameter is small, and the occurrence of resin particles is suppressed, can be obtained.
A method of adjusting the intrinsic viscosity of the melt-blown nonwoven fabric is not par ticularly limited and, for example, the intrinsic viscosity of the melt-blown nonwoven fabric can be adjusted to a desired value by adjusting an intrinsic viscosity of a raw material, a spinning tempera ture during manufacturing of the melt-blown nonwoven fabric, a detention time described below or the like.
For example, by increasing the intrinsic viscosity of the raw material, the intrinsic viscosit y of the obtained melt-blown nonwoven fabric tends to be increased in accordance with the intrinsi c viscosity of the raw material, and by decreasing the intrinsic viscosity of the raw material, the int rinsic viscosity of the obtained melt-blown nonwoven fabric tends to be decreased in accordance w ith the intrinsic viscosity of the raw material. When the spinning temperature is raised, the molecu lar weight decreases due to thermal decomposition and therefore, the intrinsic viscosity of the obtai ned melt-blown nonwoven fabric tends to be decreased. When the detention time becomes longer, the molecular weight decreases due to thermal decomposition and therefore, the intrinsic viscosity of the obtained melt-blown nonwoven fabric tends to be decreased.

(Intrinsic Viscosity)

The intrinsic viscosity of the melt-blown nonwoven fabric in the present embodiment is 0. 45 dl/g or more and 0.60 dl/g or less. When the intrinsic viscosity of the melt-blown nonwoven fa bric is 0.45 dl/g or more, the occurrence of the resin particles is suppressed. From the viewpoint of suppressing the occurrence of the resin particles, the intrinsic viscosity of the melt-blown nonwov en fabric is preferably 0.46 dl/g or more. When the intrinsic viscosity of the melt-blown nonwoven fabric is 0.60 dl/g or less, the average fiber diameter of the melt-blown nonwoven fabric becomes smaller. From the viewpoint of making the average fiber diameter of the melt-blown nonwoven fa bric smaller, the intrinsic viscosity of the melt-blown nonwoven fabric is preferably 0.55 dl/g or les s, and more preferably 0.53 dl/g or less.

A measurement method of the intrinsic viscosity will be explained in Example described b elow.

(Average fiber diameter)

The average fiber diameter of the melt-blown nonwoven fabric in the present embodiment is preferably from 0.1 $\mu$m to 0.8 $\mu$m, more preferably from 0.2 $\mu$m to 0.7 $\mu$m, and still more prefer ably from 0.3 $\mu$m to 0.6 $\mu$m, from the viewpoint of making the average fiber diameter of the melt-b lown nonwoven fabric smaller, and reducing the occurrence of the resin particles.

In a case in which the melt-blown nonwoven fabric in the present embodiment is applied t o a filter, for example, the average fiber diameter is preferably 0.1 $\mu$m or more since the break of th e filter is less likely to occur, or the average fiber diameter is preferably 0.8 $\mu$m or less since the co llection efficiency of the filter is excellent.

A measurement method of the average fiber diameter in the melt-blown nonwoven fabric will be explained in Example described below.

The average fiber diameter of the melt-blown nonwoven fabric in the present embodiment can be adjusted by controlling the intrinsic viscosity of the raw material, the spinning temperature, the detention time, a nozzle hole diameter, a single hole discharge amount (discharge amount per nozzle hole), a heated air temperature, flow rate of heated air or the like.

(Number of Resin Particles)

In the present embodiment, the number of resin particles with a diameter of 0.1 mm or more (simply, also referred to as "resin particles") in the melt-blown nonwoven fabric is preferably less than 10 particles/m$^2$.

In a case in which the melt-blown nonwoven fabric in the present embodiment is applied t o a filter, for example, it is preferable that there are fewer resin particles with a diameter of 0.1 mm or more due to excellent filter performance by suppressing the mixing of resin particles into liquid or gas that has passed through the filter.

In the present embodiment, the number of resin particles with a diameter of 0.1 mm or mo re can be adjusted to a desired value by adjusting the intrinsic viscosity of the raw material, the spi nning temperature during manufacturing of the melt-blown nonwoven fabric, the detention time or the like.

In the present embodiment, the number of the resin particles can be measured as follows. At first, a nonwoven fabric with 0.5 m$^2$ or more is prepared. Next, the number of resin particles wi th a diameter of 0.1 mm or more is measured, and then the number of resin particles is divided by a n area of the nonwoven fabric to determine the number of resin particles per unit area. The presen ce or absence of resin particles may be visually confirmed, and the diameter of the resin particles may be measured with an optical microscope. In a case in which the nonwoven fabric is sheet-like , the total area of one nonwoven fabric may be measured. In a case in which the nonwoven fabric i s in the form of a roll, 0.5 m$^2$ or more may be measured so as to include both ends in the width dire ction of the roll.

(Composition of Melt-blown Nonwoven Fabric)

The melt-blown nonwoven fabric in the present embodiment includes polybutylene tereph thalate (hereinafter, also referred to as "PBT"). A content rate of PBT in the melt-blown nonwove n fabric is preferably 50% by mass or more, more preferably 70% by mass or more and still more p referably 90% by mass or more, with respect to a total of the melt-blown nonwoven fabric, from th e viewpoint of making the average fiber diameter of the melt-blown nonwoven fabric smaller, and reducing the occurrence of the resin particles.

When the melt-blown nonwoven fabric in the present embodiment includes PBT as a main component (50% by mass or more), for example, compared with a nonwoven fabric made of poly propylene, the melt-blown nonwoven fabric has strong resistance to certain chemicals (for example , those including an organic solvent such as gasoline), and especially in a case in which the melt-bl own nonwoven fabric is applied to a filter for liquid, it can be preferably used. Further, compared with a nonwoven fabric made of polyethylene terephthalate, the melt-blown nonwoven fabric in th e present embodiment is excellent in shape stability without a special heat setting process, and ther efore can be preferably manufactured using a normal manufacturing apparatus.

The melt-blown nonwoven fabric in the present embodiment may include at least one othe r thermoplastic resin other than PBT. A known thermoplastic resin can be used as at least one othe r thermoplastic resin.

(Thermoplastic Resin)

Examples of the thermoplastic polymer specifically include an olefin polymer such as a hi gh pressure low density polyethylene, a linear low density polyethylene (so-called LLDPE), a high density polyethylene, polypropylene (a propylene homopolymer), a polypropylene random copoly mer, poly 1-butene, poly 4-methyl-1-pentene, an ethylene/propylene random copolymer, an ethyle ne/1-butene random copolymer, or a propylene/1-butene random copolymer, which is a homopoly mer or a copolymer of $\alpha$-olefins such as ethylene, propylene, 1-butene, 1-hexene, 4-methyl-1-pente ne and 1-octene; polyester other than PBT such as polyethylene terephthalate, polypropylene terep hthalate, polyethylene naphthalate; polyamide such as nylon-6, nylon-66, or polymethoxylen adipa mide; polyvinyl chloride, polyimide, an ethylene/vinyl acetate copolymer, polyacrylonitrile, polyca rbonate, polystyrene, an ionomer, or a mixture thereof. Among the above, the high pressure low d ensity polyethylene, the linear low density polyethylene (so-called LLDPE), the high density polye thylene, the polypropylene polymer such as polypropylene, the polypropylene random copolymer a nd the like, polyethylene terephthalate, polypropylene terephthalate, polyamide and the like are pre ferable. Among the above, from the viewpoint of compatibility with PBT, polyethylene terephthal ate, and polypropylene terephthalate are preferable.

A content rate of at least one other thermoplastic resin other than PBT is preferably 50% b y mass or less, more preferably 30% by mass or less, and still more preferably 10% by mass or less , with respect to a total of the melt-blown nonwoven fabric.

(Additive)

The melt-blown nonwoven fabric in the present embodiment may include an additive. As long as the purpose of the present embodiment is not impaired, the melt-blown nonwoven fabric m ay include, as an arbitrarily component, various known additives such as stabilizers, antioxidants, h eat-resistant stabilizers, weather-resistant stabilizers, antistatic agents, slip agents, antifogging agen ts, lubricants, dyes, pigments, natural oils, synthetic oils, waxes, fatty acid amides, and the like.

The content rate of the additive is preferably 10% by mass or less, more preferably 5% by mass or less, and still more preferably 1% by mass or less, with respect to a total of the melt-blown nonwoven fabric.

[Nonwoven Fabric Layer]

The melt-blown nonwoven fabric in the present embodiment may be used singly, correspo nding to the purpose, only the melt-blown nonwoven fabric in the present embodiment may be laye red in multiple layers to form a nonwoven fabric layer, or the melt-blown nonwoven fabric in the p resent embodiment and at least one other layer may be layered to form a nonwoven fabric layer

In a case in which the melt-blown nonwoven fabric in the present embodiment and at least one other layer are layered to form a nonwoven fabric layer, at least one other layer other than the melt-blown nonwoven fabric in the present embodiment may be one layer or may have 2 layers or more.

Examples of at least one other layer other than the melt-blown nonwoven fabric in the pre sent embodiment include knitted fabrics, woven fabrics, nonwoven fabrics other than the melt-blo wn nonwoven fabric in the present embodiment and films.

A method of further layering (laminating) at least one other layer to the melt-blown nonw oven fabric in the present embodiment is not particularly limited, and example thereof include vari ous methods such as thermal fusion methods such as thermal embossing, and ultrasonic fusion, me chanical entanglement methods such as needle punching and water jets, methods using adhesives s uch as hot melt adhesives and urethane adhesives, and extrusion lamination.

Examples of an another nonwoven fabric that can form a nonwoven fabric layer by layere d with the melt-blown nonwoven fabric in the present embodiment include various known nonwov en fabrics such as a melt-blown nonwoven fabric other than the melt-blown nonwoven fabric in the present embodiment, a spunbond nonwoven fabric, a wet nonwoven fabric, a dry nonwoven fabric , a dry pulp nonwoven fabric, a flashspun nonwoven fabric, a spread fiber nonwoven fabric, and th e like.

<Filter>

The melt-blown nonwoven fabric in the present embodiment can be suitably used for a filt er. In other words, the filter in the present embodiment includes the above melt-blown nonwoven f abric in the present embodiment. For example, the above nonwoven fabric layer may be used as th e filter.

According to the melt-blown nonwoven fabric in the present embodiment, since the avera ge fiber diameter of the melt-blown nonwoven fabric becomes smaller, and the occurrence of the r esin particles is suppressed, in a case in which the melt-blown nonwoven fabric is used for the filte r, collection efficiency is excellent. Since the occurrence of the resin particles is suppressed, conta mination of the filter by the resin particles tends to be reduced.

The filter may be used for either a filter for gas or a filter for liquid. From the viewpoint o f exhibiting solvent resistance, the filter can be used for the filter for liquid using a solvent.

<Uses of Melt-blown Nonwoven Fabric>

Uses of the melt-blown nonwoven fabric in the present embodiment is not particularly lim ited, and can be used for known uses as uses of a nonwoven fabric. Specific examples of uses incl ude filters such as filters for gas and filters for liquid, hygiene products such as disposable diapers, disposable pants, sanitary products, urine absorbing pads, industrial masks, hygiene masks, sheets, towels, and pet sheets, cosmetic products such as face masks and packaging materials. Among the m, because of its excellent collection efficiency, the melt-blown nonwoven fabric is preferably use d for filters. Because of solvent resistance, especially, the melt-blown nonwoven fabric is preferab ly used for filters for liquid.

<Method of Manufacturing Melt-blown Nonwoven Fabric>

The melt-blown nonwoven fabric in the present embodiment can be manufactured by a us ual method using polybutylene terephthalate. Specifically, the melt-blown nonwoven fabric is man ufactured by the following method of manufacturing the melt-blown nonwoven fabric in the presen t embodiment.

The method of manufacturing the melt-blown nonwoven fabric in the present embodiment includes a melting process of melting polybutylene terephthalate or a resin composition including polybutylene terephthalate to obtain a molten material, a spinning process of spinning the molten material from a nozzle in which plural holes are aligned, and an extending process of extending the molten material, spun by the spinning, with heated air, in which an intrinsic viscosity of the polybutylene terephthalate or the resin composition is 0.45 dl/g or more and 0.90 dl/g or less, in which a time from a start of the melting process to a start of the spinning process (also referred to as "detention time") is from 2 minutes to 30 minutes, and in which a temperature of the molten material spun in the spinning process (also referred to as "spinning temperature") is from 255°C to 350°C.

[Raw Material of Melt-blown Nonwoven Fabric]

A raw material used in the melt-blown nonwoven fabric in the present embodiment is poly butylene terephthalate or a resin composition including polybutylene terephthalate. From the view point of making the average fiber diameter of the melt-blown nonwoven fabric smaller, and the occ urrence of the resin particles is suppressed, PBT is preferably included in an amount of 50% by ma ss or more, more preferably included in an amount of 70% by mass or more, and still more prefera bly included in an amount of 90% by mass or more. An upper limit of the content rate of PBT in t he resin composition including PBT is not particularly limited, and may be 99.99% by mass or less

The resin composition including polybutylene terephthalate used in the melt-blown nonwo ven fabric in the present embodiment may include the above described thermoplastic resin, the abo ve described additive or the like.

A content rate of the above described thermoplastic resin in the raw material is preferably 50% by mass or less, more preferably 30% by mass or less, and still more preferably 10% by mass or less, with respect to a total of the raw material of the melt-blown nonwoven fabric. A content ra te of the above described additive in the raw material is preferably 10% by mass or less, more pref erably 5% by mass or less, and still more preferably 1% by mass or less, with respect to a total of t he raw material of the melt-blown nonwoven fabric.

An intrinsic viscosity of polybutylene terephthalate or the above described resin compositi on including polybutylene terephthalate used as the raw material of the melt-blown nonwoven fabr ic is 0.45 dl/g or more and 0.90 dl/g or less, and from the viewpoint of suppressing the occurrence of the resin particles, preferably 0.48 dl/g or more and 0.80 dl/g or less, more preferably 0.50 dl/g o r more and 0.75 dl/g or less, and still more preferably 0.53 dl/g or more and 0.70 dl/g or less.

Polybutylene terephthalate used as the raw material of the melt-blown nonwoven fabric is not particularly limited as long as the above described intrinsic viscosity is satisfied, a commerciall y available product may be purchased and used as it is, a commercially available product may be p urchased and the intrinsic viscosity may be adjusted by thermal decomposition or the like, or polyb utylene terephthalate may be synthesized.

Next, each process in the method of manufacturing the melt-blown nonwoven fabric in the present embodiment will be described in detail.

(Melting Process)

In a melting process, a molten material is obtained by melting polybutylene terephthalate or a resin composition including polybutylene terephthalate. A melting temperature is preferably t he same as a spinning temperature. Specifically, the melting temperature is preferably from 255°C to 350°C, more preferably from 260°C to 320°C, still more preferably from 260°C to 300°C, parti cularly preferably from 265°C to 290°C, and even more preferably from 265°C to 280°C. When th e melting temperature is 350°C or less, there is a tendency that the occurrence of the resin particles on the melt-blown nonwoven fabric is suppressed since thermal decomposition of polybutylene ter ephthalate is suppressed and a deterioration of the intrinsic viscosity is suppressed. When the melt ing temperature is 255°C or more, there is a tendency that the intrinsic viscosity of the nonwoven f abric does not become too high, and the average fiber diameter of the melt-blown nonwoven fabric easily becomes smaller.

The detention time is from 2 minutes to 30 minutes, and preferably from 5 minutes to 20 minutes. When the detention time is 2 minutes or more, there is a tendency that by thermal decom position of polybutylene terephthalate, the intrinsic viscosity of the nonwoven fabric moderately lo wers compared with the intrinsic viscosity of the raw material, the average fiber diameter of the me lt-blown nonwoven fabric becomes smaller, and the occurrence of the resin particles is suppressed. When the detention time is 30 minutes or less, there is a tendency that excess thermal decomposit ion is suppressed, the average fiber diameter of the melt-blown nonwoven fabric becomes smaller, and the occurrence of the resin particles is suppressed.

The melting temperature and the detention time may be decided by the intrinsic viscosity of the raw material and the desired intrinsic viscosity of the nonwoven fabric.

-Method of Determining Detention Time-

The detention time is determined by the following method. It can be determined by a ratio of a total volume ($m^3$) of a flow path of the molten material from an extruder to the tip of a die wit h respect to the extrusion speed ($m^3$/min) from the extruder. That is, it can be obtained from the fo llowing equation.

$$\text{Detention time (min)} = \text{total volume } (m^3)/ \text{ extrusion speed } (m^3/min)$$

(Spinning Process)

In a spinning process, the molten material is spun from a nozzle in which plural holes are aligned. Specifically, pressure is applied by the extruder to supply the molten material to a spinner et on which the nozzle is formed, and the molten material is ejected from the nozzle. The extruder is not particularly limited, and may be a single-screw extruder or a multi-screw extruder. The raw material charged from the hopper is melted in a compression unit inside the extruder. A hole diam eter of the nozzle is preferably from 0.03 mm to 0.80mm, more preferably from 0.06 mm to 0.40 m m, and still more preferably from 0.10 mm to 0.20 mm. The discharge amount per nozzle hole (sin gle hole discharge amount) is preferably from 0.010 g/min to 0.50 g/min, and more preferably fro m 0.015 g/min to 0.10 g/min. When the hole diameter and the single hole discharge amount are wi thin the above described range, the average fiber diameter of the melt-blown nonwoven fabric is ea sily controlled to the range of 0.1 $\mu$m to 0.8 $\mu$m.

The spinning temperature in the spinning process is from 255°C to 350°C. The spinning t emperature is preferably from 260°C to 320°C, more preferably from 260°C to 300°C, still more p referably from 265°C to 290°C, and particularly preferably from 265°C to 280°C. When the spinn ing temperature is 350°C or less, there is a tendency that the occurrence of the resin particles on th e melt-blown nonwoven fabric is suppressed since thermal decomposition of polybutylene terephth alate is suppressed and a deterioration of the intrinsic viscosity is suppressed. When the spinning t emperature is 255°C or more, there is a tendency that the intrinsic viscosity of the nonwoven fabric does not become too high, and the average fiber diameter of the melt-blown nonwoven fabric easil y becomes smaller. It is considered that the intrinsic viscosity during the spinning is almost the sa me as the intrinsic viscosity of the obtained melt-blown nonwoven fabric. The intrinsic viscosity d uring the spinning can be adjusted to the desired value by controlling the detention time, the meltin g temperature, and the spinning temperature in addition to the intrinsic viscosity of the raw materia l.

(Extending Process)

In an extending process, the molten material, spun by the spinning, is extended with heate d air. A temperature of the heated air is preferably from 265°C to 380°C, more preferably from 28 0°C to 360°C, and still more preferably from 285°C to 335°C. A flow rate of the heated air is pref erably from 100 Nm$^3$/h/m to 3000 Nm$^3$/h/m, more preferably from 200 Nm$^3$/h/m to 1500 Nm$^3$/h/m, and still more preferably from 250 Nm$^3$/h/m to 1000 Nm$^3$/h/m. By adjusting the temperature of th e heated air and the flow rate to high temperature range and high speed range as described above, t he average fiber diameter of the melt-blown nonwoven fabric becomes smaller, and the occurrence of the resin particles is suppressed.

The fibers fibrillated by high-temperature and high-speed air are collected on a collecting plate (for example, a porous belt or a porous drum) and deposited to obtain the melt-blown nonwo ven fabric. A basis weight of the melt-blown nonwoven fabric is adjusted to the desired value by c hanging the speed of the collector. The basis weight of the melt-blown nonwoven fabric can be ap propriately determined depending on the intended use, the basis weight is preferably from 5 g/m$^2$ t o 200 g/m$^2$, and more preferably from 5 g/m$^2$ to 100 g/m$^2$.

In the method of manufacturing the melt-blown nonwoven fabric in the present embodime nt, by mainly adjusting the intrinsic viscosity of the raw material, the spinning temperature, or the detention time, the intrinsic viscosity of the melt-blown nonwoven fabric can be adjusted to 0.45 dl /g or more and 0.60 dl/g or less.

Hereinafter, the embodiment in the present invention is further specifically explained base d on Examples, and the present invention is not limited to these Examples that is one embodiment i n the present invention.

Physical property values and the like in Examples and Comparative Examples were measu red by the following methods.

(1) Number of Resin Particles on Melt-blown Nonwoven Fabric

A 2 m$^2$ nonwoven fabric was collected so as to include both ends of the melt-blown nonw oven fabric in the width direction. The resin particles were visually searched for, and the diameter of the resin particles was measured with an optical microscope. The number of resin particles with a diameter of 0.1 mm or more was measured and divided by the area of the nonwoven fabric to ob tain the number of resin particles with a diameter of 0.1 mm or more per unit area, which was eval uated in accordance with the following evaluation criteria. If the number of lumps is less than 10 p articles per unit area, it is within the permissible range.

-Evaluation criteria-

A: lumps of less than 10 particles/m$^2$
B: lumps of 10 particles/m$^2$ or more

(2) Melt Viscosity

The melt viscosity of the resin used was measured with a capillary rheometer (Capillary Graph ID, manufactured by Toyo Seiki Seisakusho Co., Ltd.) at a melting temperature of 290°C a nd a shear rate of 1000 sec$^{-1}$.

(3) Intrinsic Viscosity (dl/g)

Regarding the intrinsic viscosity, the sample to be measured was dissolved in a mixed solv ent of phenol/tetrachloroethane (1,1,2,2-tetrachloroethane) = 60/40 (mass ratio) to prepare a solutio n, flow seconds of the obtained solution at 35°C was measured using an Ubbelohde viscometer, an d the measured value was applied to the following formula (A) to calculate the intrinsic viscosity [ η].

$$[\eta] = \eta SP/[C(1+K\eta SP)]...(A)$$

ηSP: Specific viscosity
C: Sample concentration (g/dl)
K: Constant (the slope of the straight line of the graph when the specific viscosity ηSP of s amples with different solution concentrations C (3 points or more) was measured based on the foll owing formula (B), and the solution concentrations C were plotted on the horizontal axis and ηSP/ Cs' are plotted on the vertical axis.)

$$\eta SP = (t\text{-}t0)/t0...(B)$$

t: Flow seconds of sample solution (seconds)

t0: Flow seconds of solvent (seconds)

(4) Average fiber diameter ($\mu$m)

A photograph of the melt-blown nonwoven fabric at a magnification of 1000 times was ta ken using an electron microscope (S-3500N manufactured by Hitachi, Ltd.), among the fibers sho wn in the photograph, the width (diameter) of all the fibers whose width (diameter) can be measure d was measured. This operation was repeated until the number reached 1000 or more. The averag e value of the obtained measurement results was defined as an average fiber diameter.

(5) Basis Weight [g/m$^2$]

Ten test pieces of 100 mm (fiber flow direction: MD) $\times$ 100 mm (direction orthogonal to fiber flow direction: CD) were collected from the nonwoven fabric to be measured. Places at which the test pieces were collected were set at ten places in the CD direction. Then, the mass [g] of each collected test piece was measured using an electronic balance scale (manufactured by Kensei Co., LTD.) to determine the average value of the mass of each test piece. The above determined average value was converted into a mass [g] per 1 m$^2$, which was regarded as the basis weight [g/m$^2$] of each nonwoven fabric.

(6) Thickness (mm)

The thickness of each of the 10 nonwoven fabrics to be measured was measured at a total of 5 locations at the center and the four corners, and the average value of the 10 nonwoven fabrics in total was calculated. A thickness gauge with a load of 7 gf/cm$^2$ (probe diameter 50 mmcp) was used to measure the thickness.

(7) Air Permeability (cm$^3$/cm$^2$/sec)

The melt-blown nonwoven fabric with the basis weight of 15 g/m$^2$ was prepared, and five test pieces of 20 cm $\times$ 20 cm were collected from the melt-blown nonwoven fabric in a constant temperature room at a temperature of 20 $\pm$ 2°C and a humidity of 65 $\pm$ 2% specified in JIS Z8703 (standard condition at the test site), and the amount (cm$^3$/cm$^2$/sec) of air passing through each test piece using a Frazier type tester was measured in accordance with JIS L1096 (8.27.1A method; Frazier type method), and the average value was calculated.

(8) Specific Surface Area

A BET specific surface area (m$^2$/g) of the melt-blown nonwoven fabric (specific surface area by BET method) was measured by a pore distribution meter (Belsorb max, manufactured by BEL JAPAN, Inc.) using physical adsorption of nitrogen gas in accordance with JIS Z8830:2013.

[Example 1]

A PBT resin ("Juranex 300FP" manufactured by Polyplastics Co., Ltd.) in which the intrinsic viscosity was 0.69 dl/g, and the melt viscosity was 160 dPa·s was vacuum dried at 130°C for 4 hours. The manufacture of the melt-blown nonwoven fabric was carried out using this PBT resin under the condition of the spinning temperature of 280°C, a nozzle spinneret with the hole diameter of 0.12 mm$\phi$, the single hole discharge amount of 0.029 g/min, the heated air temperature of 300°C, and the heated air amount of 300 Nm$^3$/h/m. The detention time in the extruder was 15 minutes.

The obtained melt-blown fabric in Example 1 was evaluated by the above evaluation methods.

The results are shown in Table 1.

[Example 2]

The manufacture of the melt-blown nonwoven fabric was carried out in the same manner as in Example 1 except that a PBT resin ("Juranex 200FP" manufactured by Polyplastics Co., Ltd.) in which the intrinsic viscosity was 0.63 dl/g, and the melt viscosity was 140 dPa·s was used as the raw material, and the spinning temperature was 270°C and the heated air temperature was 290°C. The detention time in the extruder was 15 minutes. The results are shown in Table 1.

[Example 3]

The manufacture of the melt-blown nonwoven fabric was carried out in the same manner as in Example 1 except that a nozzle spinneret with the hole diameter of 0.08 mmφ was used, and the single hole discharge amount was 0.020 g/min. The detention time in the extruder was 22 minutes. The results are shown in Table 1.

[Example 4]

The manufacture of the melt-blown nonwoven fabric was carried out in the same manner as in Example 1 except that the heated air temperature was 330°C. The results are shown in Table 1.

[Comparative Example 1]

The manufacture of the melt-blown nonwoven fabric was carried out in the same manner as in Example 1 except that the spinning temperature was 320°C and the heated air temperature was 340°C. The results are shown in Table 1.

[Comparative Example 2]

The manufacture of the melt-blown nonwoven fabric was carried out in the same manner as in Example 1 except that the spinning temperature was 250°C and the heated air temperature was 270°C. The results are shown in Table 1.

[Table 1]

| | | Example 1 | Example 2 | Example 3 | Example 4 | Comparative Example 1 | Comparative Example 2 |
|---|---|---|---|---|---|---|---|
| Raw material | Type | PBT | PBT | PBT | PBT | PBT | PBT |
| | Intrinsic viscosity (dl/g) | 0.69 | 0.63 | 0.69 | 0.69 | 0.69 | 0.69 |
| | Melt viscosity (dpa·s) | 160 | 140 | 160 | 160 | 160 | 160 |
| Manufacture condition | Spinning temperature (°C) | 280 | 270 | 280 | 280 | 320 | 250 |
| | Nozzle hole diameter (mmφ) | 0.12 | 0.12 | 0.08 | 0.12 | 0.12 | 0.12 |
| | Single hole discharge amount (g/min) | 0.029 | 0.029 | 0.020 | 0.029 | 0.029 | 0.029 |
| | Air temperature (°C) | 300 | 290 | 300 | 330 | 340 | 270 |
| | Air amount (Nm$^3$/h/m) | 300 | 300 | 300 | 300 | 300 | 300 |
| | Detention time (min) | 15 | 15 | 22 | 15 | 15 | 15 |
| Measurement/ Evaluation result | Average fiber diameter (μm) | 0.7 | 0.5 | 0.4 | 0.6 | 0.5 | 1.5 |
| | Intrinsic viscosity of nonwoven fabric | 0.49 | 0.48 | 0.47 | 0.48 | 0.40 | 0.62 |
| | Resin particles | A | A | A | A | B | A |
| | Basis weight (g/cm$^2$) | 15 | 15 | 15 | 15 | 15 | 15 |
| | Thickness (mm) | 0.14 | 0.14 | 0.14 | 0.13 | 0.14 | 0.19 |
| | Air permeability (cm$^3$/cm$^2$/sec) | 16.2 | 13.1 | 10.9 | 14.5 | 19.4 | 22.3 |
| | Specific surface area (m$^2$/g) | 1.2 | 1.8 | 2.4 | 1.4 | 0.8 | 0.5 |

As shown in Fig. 1, compared with the melt-blown nonwoven fabric obtained in each Co mparative Example, the melt-blown nonwoven fabric obtained in each Example had a smaller aver age fiber diameter and the occurrence of the resin particles was suppressed.

The disclosure of Japanese Patent Application 2019-104626, filed on June 4, 2019 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

**Claims**

1. A melt-blown nonwoven fabric, comprising polybutylene terephthalate, wherein an intrinsic viscosity of the melt-blown nonwoven fabric is from 0.45 dl/g or more and 0.60 dl/g or less.

2. The melt-blown nonwoven fabric according to claim 1, wherein an average fiber diameter is from 0.1 $\mu$m to 0.8 $\mu$m.

3. The melt-blown nonwoven fabric according to claim 1 or 2, wherein a number of resin particles with a diameter of 0.1 mm or more is less than 10 particles/m$^2$.

4. The melt-blown nonwoven fabric according to any one of claims 1 to 3, which is used for a filter.

5. A filter comprising the melt-blown nonwoven fabric according to any one of claims 1 to 4.

6. A method of manufacturing a melt-blown nonwoven fabric, comprising: a melting process of melting polybutylene terephthalate or a resin composition including polybutylene terephthalate to obtain a molten material, a spinning process of spinning the molten material from a nozzle in which plural holes are aligned, and an extending process of extending the molten material, spun by the spinning, with heated air,

   wherein an intrinsic viscosity of the polybutylene terephthalate or the resin composition is 0.45 dl/g or more and 0.90 dl/g or less,
   wherein a time from a start of the melting process to a start of the spinning process is from 2 minutes to 30 minutes, and
   wherein a temperature of the molten material spun in the spinning process is from 255°C to 350°C.

7. The method of manufacturing a melt-blown nonwoven fabric according to claim 6, wherein a temperature of the heated air is from 265°C to 380°C, and a flow rate of the heated air is from 200 Nm$^3$/h/m to 800 Nm$^3$/h/m.

8. The method of manufacturing a melt-blown nonwoven fabric according to claim 6 or 7, wherein an intrinsic viscosity of the melt-blown nonwoven fabric is 0.45 dl/g or more and 0.60 dl/g or less.

**INTERNATIONAL SEARCH REPORT**

| International application No. |
| --- |
| PCT/JP2020/021802 |

**A. CLASSIFICATION OF SUBJECT MATTER**
Int.Cl. D04H3/16(2006.01)i, B01D39/16(2006.01)i, D04H3/011(2012.01)i
FI: D04H3/16, D04H3/011, B01D39/16A

According to International Patent Classification (IPC) or to both national classification and IPC

**B. FIELDS SEARCHED**

Minimum documentation searched (classification system followed by classification symbols)
Int.Cl. D04H1/00-18/04, B01D39/16, D01D1/00-13/02, D01F1/00-6/96,
D01F9/00-9/04

Documentation searched other than minimum documentation to the extent that such documents are included in the fields searched
Published examined utility model applications of Japan     1922–1996
Published unexamined utility model applications of Japan   1971–2020
Registered utility model specifications of Japan           1996–2020
Published registered utility model applications of Japan   1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 4-2850 A (KURARAY CO., LTD.) 07.01.1992 (1992-01-07), claims, page 2, upper left column, lines 7-11, page 3, upper left column, lines 4-6, page 3, lower left column, line 18 to page 4, lower left column, line 19, page 5, upper left column, lines 5-8, examples | 1-8 |
| A | JP 2007-39853 A (MITSUBISHI ENG PLASTIC CORPORATION) 15.02.2007 (2007-02-15), entire text | 1-8 |
| A | JP 2-104755 A (ASAHI KASEI KOGYO CO., LTD.) 17.04.1990 (1990-04-17), entire text | 1-8 |
| A | JP 2015-59294 A (KB SEIREN, LTD.) 30.03.2015 (2015-03-30), entire text | 1-8 |

☐ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16.07.2020 | 28.07.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2020/021802 |

| | | |
|---|---|---|
| JP 4-2850 A | 07.01.1992 | (Family: none) |
| JP 2007-39853 A | 15.02.2007 | (Family: none) |
| JP 2-104755 A | 17.04.1990 | (Family: none) |
| JP 2015-59294 A | 30.03.2015 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008238109 A
- JP 2007125546 A
- JP 2019104626 A